(19) Europäisches Patentamt
European Patent Office
Office européen des brevets

(11) Publication number: **0 267 292 B1**

(12) **EUROPEAN PATENT SPECIFICATION**

(45) Date of publication of patent specification: **12.01.94**

(51) Int. Cl.$^5$: **B29B 9/06**, B29B 9/12, B29B 11/16

(21) Application number: **87902736.5**

(22) Date of filing: **17.04.87**

(86) International application number: **PCT/JP87/00246**

(87) International publication number: **WO 87/06178 (22.10.87 87/23)**

(54) **METHOD FOR MANUFACTURING PELLETS FOR MAKING ELECTROMAGNETIC WAVE SHIELDING MATERIAL.**

(30) Priority: **17.04.86 JP 86999/86**
**19.12.86 JP 301462/86**

(43) Date of publication of application: **18.05.88 Bulletin 88/20**

(45) Publication of the grant of the patent: **12.01.94 Bulletin 94/02**

(84) Designated Contracting States: **DE FR GB**

(56) References cited:
**FR-A- 2 423 320**
**JP-A- 5 790 020**
**JP-A- 5 922 710**
**JP-A- 5 949 913**
**JP-A-59 182 819**
**JP-A-60 162 604**
**JP-A-60 179 204**
**JP-B- 606 764**

**JAPANESE PATENTS GAZETTE, Week 8612, 30th April 1986, section chemical, Derwent-Publications Ltd, London, page 52, no. 86-079531/12; & JP-A-61 029 505 (MITSUI PETROCHEM IND. K.K.) 10-02-1986**

(73) Proprietor: **THE FURUKAWA ELECTRIC CO., LTD.**
**6-1, Marunouchi 2-chome**
**Chiyoda-ku**
**Tokyo 100(JP)**

(72) Inventor: **KOSUGA, Izumi**
**67, Wakatake-cho, Sakae-ku**
**Yokohama-shi Kanagawa-ken 247(JP)**
Inventor: **OTANI, Kenichi**
**121, Togahara**
**Hiratsuka-shi Kanagawa-ken 254(JP)**
Inventor: **MATSUMOTO, Kazuaki**
**Fuji Mansion 206**
**47-4, Toga-cho**
**Hikone-shi Shiga-ken 522(JP)**

(74) Representative: **Hoffmann, Klaus, Dr. rer. nat.**
**Hoffmann, Eitle & Partner**
**Patentanwälte**
**Postfach 81 04 20**
**D-81904 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.9/3.3.3)

**JAPANESE PATENTS GAZETTE, Week 8503, 27th February 1985, section chemical,Derwent Publications Ltd, London, page 10, no. 85-015057/03; &JP-A-59 210 957 (DENKI KAGAKU KOGYO K.K.) 29-11-1984**

**PATENT ABSTRACTS OF JAPAN, vol. 8, no. 191, 4th September 1984 (M-322)[1628]; & JP-A-59 81 121 (TOUYOU SEIKAN K.K.) 10-05-1984**

## Description

### Technical Field

This invention relates to a method for manufacturing pellets for making electromagnetic wave shielding material which makes use of conductive fibers as a filler.

### Background Art

The following are conventional methods for manufacturing pellets for making electromagnetic wave shielding material with conductive fibers dispersed in a matrix resin:

(1) A method for manufacturing pellets through the kneading of a matrix resin and conductive fibers, cut about 5 mm long by, for example, an extruder and the dispersing of the conductive fibers in the matrix resin (JP-A-59 210 957).

(2) A method for manufacturing pellets through the coating of a strand of conductive fibers directly with a matrix resin by an extruder and the cutting of the strand to a desired length.

(3) A method for manufacturing pellets by dipping a strand made up of conductive fibers into a hot-melt resin, to coat it with the resin and by cutting the coated strand into predetermined lengths.

(4) A method for manufacturing pellets by dipping conductive fibers into a solution of a matrix resin in a solvent to coat them with the matrix resin and by cutting them to a desired length.

In the method (1), during the kneading of the conductive fibers and resin by the kneader, the conductive fibers are cut shorter than their initially cut length due to the direct cutting of the conductive fibers by a screw and due to the shearing of the resin. Furthermore, where an electromagnetic wave shielding material is formed through the molding of the kneaded material, such as an extrusion molding or injection molding, the resultant conductive fibers become much shorter. Because of the dispersion of the thus-shortened conductive fibers (0.5 mm or below) in the resin it is not yet possible to obtain a practical shield effect due to an increase in multiple contacts among the conductive fibers and to the consequent increase of electrical resistance of the electromagnetic wave shielding material. In order to improve the shield effect, more conductive fibers need to be added to the resin, resulting in high costs. According to the method (2), it is possible to prevent the undesirable cutting of the conductive fibers. However, it is difficult to disperse the conductive fibers in the resin during the molding process. This is because the conductive fibers are not uniformly mixed in the resin due to a lessening of the wettability of the conductive fibers and matrix resin. It is not possible to obtain a shield effect because of the increased electrical resistance involved. Method (3) involves poor workability and is never economical. Method (4) cannot obtain the desired surface configuration and is high in costs because of the use of the solvent.

### Disclosure of Invention

It is accordingly the object of this invention to provide a method for manufacturing electromagnetic wave shielding pellets, in which a bundle of conductive fibers is impregnated with a resin oligomer (the surface treatment) and then the impregnated bundle is coated with another resin, the steps of impregnation and coating to be sequentially performed through the use of respective extruders. Such a technique allows the conductive fibers of a predetermined length to be better dispersed in the ultimate electromagnetic wave shielding material, whereby it is possible to obtain an excellent electromagnetic wave shielding effect.

According to the present invention, there is provided a method for manufacturing pellets which can be formed into an electromagnetic wave shielding material, comprising the steps of:

impregnating a bundle of conductive fibers with a pressurized melted thermoplastic resin oligomer,

extruding a thermoplastic resin which is compatible with the resin oligomer on the outside of the impregnated bundle to coat it whilst the resin oligomer retains its fluidity; and

cutting the resultant impregnated and coated bundle into pellets.

According to this invention, as conductive fibers, use is made of, for example, carbon fibers or metal fibers, such as stainless steel, copper, copper alloy, iron and aluminium fibers, including metal-coated glass fibers, having a diameter of 8 to 50 µmØ. In this connection it is to be noted that the respective fibers are bundled in groups of 1000 to 10000. The bundle of conductive fibers is impregnated, through either extruders in tandem or through a common head, with a thermoplastic resin oligomer which is compatible with a thermoplastic resin, and then coating the impregnated bundle with the thermoplastic resin. Subsequent to being cooled, the coated impregnated bundles are cut by a high-speed cutter to an arbitrary length to provide pellets from which an electromagnetic wave shielding material can be formed.

Examples of preferred combinations of resin oligomer and coating resin include a combination of ethyleneethylacrylate copolymer (hereinafter referred to as EEA) of an average molecular weight of not more than 15000 as the resin oligomer and acrylonitrile-butadiene-styrene copolymer (hereinafter referred to as ABS) or acrylonitrile-styrene copolymer (hereinafter referred to as AS) as the coating resin; a combination of ethylene vinyl acetate (hereinafter referred to as EVA) of a melt flow rate of 100 (g/10 minutes) or EEA of a melt flow rate of 100 (g/10 minutes) or polyester resin of

$$-\!\!\left(CH_2\right)_5-\overset{\overset{\displaystyle O}{\|}}{C}-O\!\!\!\!\!\!\!\!\!\phantom{X}\right)_n$$

at n < 300 as the resin oligomer and polyvinyl chloride resin (hereinafter referred to as PVC) as the coating resin; a combination of aliphatic hydrocarbon series wax of an average molecular weight of not more than 20000 as the resin oligomer and polyolefin resin as the coating resin; and a combination of a linear copolymer type polyester resin of an average molecular weight of not more than 20000 as the resin oligomer and a polyester resin as the coating resin.

In the method of this invention, thermoplastic resin oligomer is extruded through the extruder, prior to coating the bundle of conductive fibers with the thermoplastic coating resin. The oligomer is pressurized within an oligomer-sealed nipple holder to allow it to fill the interstices of the conductive fibers.

The thermoplastic resin oligomer should be not more than 10000 centipoises at the time of melting and preferably not more than 5000 centipoises, since the resin oligomer can impregnate the conductive fibers in an excellent state due to its high fluidity.

The reason why the conductive fibers are initially impregnated with the resin oligomer which is both compatible with the thermoplastic resin used as the coating and has such a high fluidity at the time of melting is that the thermoplastic resin used as a coating has a better wettability with the bundle of impregnated conductive fibers and it results in the conductive fibers being dispersed uniformly in the ultimate electromagnetic wave shielding material.

The conductive fibers, if pelletized without being impregnated with the matrix of resin oligomer, reveal no firmness and, partially remain uncut, and are chained together. If successfully cut, the conductive fibers will drop off. As a result, conductive fibers which are not impregnated with the matrix of resin oligomer, have poor workability.

If, on the other hand, the bundle of conductive fibers is simply impregnated with the resin oligomer without being subsequently coated on its exterior with the thermoplastic resin, and then pelletized, the impregnated oligomer resin melts earlier than the thermoplastic resin at the time of molding by an injection molding method, etc., when said impregnated pellets are dry-blended with natural pellets of the thermoplastic resin material. As a result, the oligomer resin from the impregnated pellets covers the surface of the natural pellets and these pellets slip relative to each other so that the shearing force exerted by, for example, a screw on the pellets is decreased with the consequent non-uniformity of pellets.

As the material forming the thermoplastic resin coating, use is made of, in addition to the aforementioned materials, polycarbonate, polypropylene, polyamide, modified polyphenylene oxide (modified PPO) or polyacetal, either single or in combination, or such a resin containing a flame retardant, a glass fiber reinforcing agent or an age resistor, in which case any such resin composition may be used if it can continuously be extruded through an extruder.

If the weight mix ratio of the conductive fibers and the thermoplastic resins is such that not more than 3% by weight is conductive fibers, it is not possible to obtain any practical effect of shielding electromagnetic waves, and such that, if not less than 70% by weight is conductive fibers, the resultant pellets will be cracked due to a lesser amount of resin involved, or they will be crumbled.

On the other hand, the weight mix ratio between the thermoplastic resin oligomer and the conductive fibers is such that, if not more than 5% by weight is thermoplastic resin oligomer, the pellets obtained never produce a uniform molding due to poor wettability between the bundle of impregnated conductive fibers and the thermoplastic resin, and such that, if not less than 30% by weight is thermoplastic resin oligomer, the mechanical properties of the thermoplastic resins as a whole are lowered due to the large relative amount of oligomer.

The conductive fibers should be 4 to 100 $\mu$m in thickness and, more preferably, 8 to 50 $\mu$m in thickness. The reasons for these are as follows. If the conductive fibers are less than 4 $\mu$m, their mechanical properties, such as tensile strength and bending strength are very low, and hence the conductive fibers produce no practical shield effect because they are cut to pieces in the forming process.

The conductive fibers, less than 4 μm in thickness, are difficult to manufacture, from the industrial point of view, and very costly.

Let it be supposed that conductive fibers of not less than 100 μm and not more than 100 μm, are added into a matrix in equal amounts. In this case, these conductive fibers are less likely to produce an effective conductive path due to the small amount of the fibers. Furthermore, the conductive fibers are poor in their workability due to their greater thickness and cannot be impregnated to the thinner sections of molding products, precision component parts, and so on. According to this invention, pellets for making shielding electromagnetic wave material are preferably 3 to 10 mm in length. The reason is that, for less than 3 mm, the pellets are further cut to a smaller length at the time of molding so that no practical electromagnetic wave shielding material is obtained due to the occurrence of their multiple contact and hence to an increase in resistance and that, for more than 10 mm, the conductive fibers will form fiber balls upon being molded into a product.

Brief Description of the Drawings

Fig. 1 is a diagrammatic explanative view showing an apparatus for manufacturing electromagnetic wave shielding pellets.

Best Mode for Carrying out the Invention

Example 1

With first and second extruders 1 and 2 placed in tandem as shown in Fig. 1, 5000 stainless steel fibers (8 μmØ) were run in a vacuum device 3. After running the fibers ahead and removing air surrounding them, they were then passed through a polyethyleneterephthalate (PET) oligomer (melt viscosity: 1000 centipoises at 200°C) filling the nipple holder 6 of the first extruder 1 resulting in the oligomer impregnating into the bundle of fibers; after impregnating the bundle of fibers with the oligomer, the impregnated bundle was then coated with polybutyleneterephthalate (trade name: 1401-X07-Toray Industries, Inc) on its outside thereof by passing through a nipple 8; and, subsequent to cooling the fibers coated by the resin, cut it to a length of 6 mm to obtain pellets for making shielding electromagnetic wave material. It is to be noted that the vacuum device 3 used to remove air from the fibers can be dispensed with. In Fig. 1, reference numerals 5, 7, 9 and 10 denote a crosshead, die, manometer and heater, respectively.

Example 2

As in Example 1, stainless steel fibers were impregnated through a first extruder with an EEA resin (manufactured by Nisseki Kagaku Co., Ltd) having a molecular weight of about 5000 and then coated through a second extruder with an ABS resin (manufactured by Nippon Gosei Gomu Co., Ltd) to obtain pellets for making shielding electromagnetic wave material.

Example 3

As in Example 1, stainless steel fibers were impregnated through a first extruder with an EEA resin (manufactured by Nisseki Kagaku Co., Ltd) having molecular weight of about 5000 and coated through a second extruder with an AS resin to obtain pellets for making shielding electromagnetic wave material.

Example 4

As in Example 1, stainless steel fibers were impregnated through a first extruder with EVA, commercially available under the trade name of EVAFEX 45X (manufactured by Mitsui Polychemical Co., Ltd), and then coated through a second extruder with PVC (manufactured by Riken Vinyl Co., Ltd) to obtain pellets for making shielding electromagnetic wave material.

Example 5

As in Example 1, stainless steel fibers were impregnated through a first extruder with a polyester resin, commercially available under the trade name of PLAXEL 1-1-1 (manufactured by Daisel Kagaku Kogyo Co., Ltd) of a structural formula

$$-\!\left(-(CH_2)_5-\overset{\overset{\displaystyle O}{\|}}{C}-O-\right)_{n}$$

having a molecular weight of about 10000, and then coated through a second extruder with PVC (manufactured by Riken Vinyl Co., Ltd.) to obtain pellets for making shielding electromagnetic wave material.

Example 6

As in Example 1, stainless steel fibers were impregnated through a first extruder with EEA (manufactured by Nisseki Kagaku Co., Ltd) having a molecular weight of about 5000 and then coated through a second extruder with PVC (manufactured by Riken Vinyl Co., Ltd) to obtain pellets for making shielding electromagnetic wave material.

Example 7

As in Example 1, stainless steel fibers were impregnated through a first extruder with polyethylene-series wax commercially available under the trade name of HIGH WAX (manufactured by Mitsui Sekiyu Kagaku Co., Ltd) and then coated through a second extruder with polyethylene (manufactured by Idemitsu Sekiyu Kagaku Co., Ltd) to obtain pellets for making shielding electromagnetic wave material.

Example 8

As in Example 7, the manufacturing steps were carried out, except with the use of 300 copper fibers (50 µmØ) in place of the aforementioned stainless steel fibers to obtain pellets for making shielding electromagnetic wave material.

Example 9

As in Example 1, stainless steel fibers were impregnated through a first extruder with a linear copolymer type polyester-series hot melt adhesive, commercially available under VIRON G x 251 M (manufactured by Toyobo Co., Ltd), and then coated through a second extruder with polybutyleneterephthalate, commercially available under the trade name of 1401-X07 (manufactured by Toray Industries, Inc.), to obtain pellets for making shielding electromagnetic wave material.

Controls 1 to 6

In place of impregnating the conductive fibers with oligomers of a matrix resin extruded through a first extruder and converging them past a nipple, the conductive fibers were coated directly with the matrix resin to obtain pellets for making shielding electromagnetic wave material.

The pellets of the aforementioned Examples and Controls were injection molded under the identical conditions to yield sheets 60 mm × 60 mm × 3 mm. The sheets obtained were measured for their volume resistivity and for their electromagnetic wave shield effect, the results of which are shown in Tables 1 and 2.

Table 1

| Example | | 1 | 2 | 3 | 4 | 5 | 6 | 7 | 8 | 9 |
|---|---|---|---|---|---|---|---|---|---|---|
| Thermoplastic resin | | PBT | ABS | AS | PVC | PVC | PVC | PE | PE | PBT |
| Contents of stainless steel fiber(weight%) | | 10 | 10 | 10 | 10 | 10 | 10 | 10 | - | - |
| Contents of copper fibers (weight%) | | - | - | - | - | - | - | - | 20 | 10 |
| Volume resistivity (Ω-cm) | | $9\times10^{-2}$ | $1\times10^{-1}$ | $3\times10^{-1}$ | $1\times10^{-1}$ | $8\times10^{-2}$ | $8\times10^{-2}$ | $5\times10^{-1}$ | $1\times10^{-1}$ | $8\times10^{-2}$ |
| Shield effect (dB) 300 MHz | electric field | 55 | 68 | 62 | 60 | 65 | 65 | 60 | 63 | 63 |
| | magnetic field | 40 | 50 | 49 | 50 | 50 | 50 | 45 | 50 | 57 |
| Dispersibility | | excel-lent | excel-lent | excel-lent | excel-lent | excel-lent | excel-lent | excel-lent | excel-lent | excel-lent |
| Aspect ratio | | 350 | 300 | 280 | 300 | 320 | 310 | 250 | 300 | 310 |

Table 2

| Control No. | | 1 | 2 | 3 | 4 | 5 | 6 |
|---|---|---|---|---|---|---|---|
| Thermoplastic resin | | PBT | ABS | AS | PVC | PE | PE |
| Contents of stainless steel fiber (weight%) | | 10 | 10 | 10 | 10 | 10 | - |
| Contents of copper fibers (weight%) | | - | - | - | - | - | 20 |
| Volume resistivity (Ω-cm) | | $1\times10^0$ | $1\times10^2$ | $5\times10^2$ | $1\times10^4$ | $1\times10^4$ | $1\times10^3$ |
| Shield effect(dB) 300 MHz | electric field | 40 | 35 | 25 | 10 | 5 | 10 |
| | magnetic field | 20 | 15 | 20 | 5 | 0 | 6 |
| Dispersibility | | better | better | impossible | impossible | impossible | impossible |
| Aspect ratio | | 250 | 200 | 190 | 200 | 200 | 220 |

As evident from Tables 1 and 2 above, according to this invention, the conductive fibers can be fully impregnated with the oligomer of the aforementioned matrix resin through the nipple holder, and are therefore very intimately dispersed at the time of molding the pellets into a sheet, in which case, an excellent shield effect has been confirmed.

Controls 7 to 12

Conductive fibers of 6 mm in cut length and thermoplastic resin pellets were extruded through a biaxial extruder to obtain composite pellets. The composite pellets thus obtained were examined for their volume resistivity, the results of which are as follows.

Table 3

| Control No. | | 7 | 8 | 9 | 10 | 11 | 12 |
|---|---|---|---|---|---|---|---|
| Thermoplastic resin | | PBT | ABS | AS | PVC | PE | PE |
| Contents of stainless steel fiber (weight%) | | 10 | 10 | 10 | 10 | 10 | - |
| Contents of copper fibers (weight%) | | - | - | - | - | - | 20 |
| Volume resistivity (Ω-cm) | | $1\times10^1$ | $1\times10^3$ | $1\times10^3$ | $1\times10^4$ | $1\times10^4$ | $5\times10^3$ |
| Shield effect(dB) 300 MHz | electric field | 40 | 10 | 13 | 5 | 5 | 10 |
| | magnetic field | 15 | 7 | 7 | 0 | 0 | 8 |
| Dispersibility | | excellent | excellent | excellent | excellent | excellent | excellent |

Example 10

The same manufacturing steps as in Example 2 were carried out except that, in extrusion of an EEA resin (manufactured by Nisseki Kagaku Co., Ltd) having a molecular weight of about 5000 through a first extruder, the amount of the resin for impregnation of stainless steel fibers was changed as shown in Table 4 below by changing the pressure. In this way, pellets for making shielding electromagnetic wave material were obtained according to this invention.

Table 4

| Thermoplastic resin | | ABS | ABS | ABS | ABS | ABS |
|---|---|---|---|---|---|---|
| Amount of EEA resin impregnated | | 3 | 7 | 15 | 25 | 35 |
| Contents of stainless steel fiber (weight%) | | 10 | 10 | 10 | 10 | 10 |
| Volume resistivity (Ω-cm) | | $1\times10^{2}$ | $1\times10^{-1}$ | $1\times10^{-1}$ | $1\times10^{-1}$ | $1\times10^{-1}$ |
| Shield effect(dB) 300 MHz | electric field | 35 | 65 | 65 | 65 | 65 |
| | magnetic field | 15 | 50 | 50 | 50 | 50 |
| Dispersibility | | impossible | better | excellent | excellent | excellent |
| Aspect ratio | | 200 | 250 | 280 | 280 | 280 |
| Tensile strength (kg/cm$^2$) | | 380 | 380 | 375 | 365 | 300 |

Molding products were manufactured with the use of the aforementioned conductive pellets and measured for their various characteristics.

As evident from Table 4, the conductive fibers if impregnated with not more than 5% weight of thermoplastic resin oligomer, are poor in dispersibility due to a lower wettability between them and the thermoplastic resin (matrix), failing to obtain any practical shielding characteristic. If the aforementioned amount is not less than 30% by weight, it has been found that the mechanical characteristics are lowered.

Example 11

Pellets for making shielding electromagnetic wave material were obtained as in Example 2, except that an amount of ABS resin (JSR35NP) extruded through a second extruder varies to such levels as in Table 5 below.

Table 5

| Thermoplastic resin | | ABS | ABS | ABS | ABS |
|---|---|---|---|---|---|
| Contents of stainless steel fiber (weight%) | | 2 | 10 | 40 | 75 |
| Volume resistivity (Ω-cm) | | $1\times10^{4}$ | $1\times10^{-1}$ | $1\times10^{-3}$ | non-pelletizable |
| Shield effect(dB) 300 MHz | electric field | 5 | 67 | 75 | |
| | magnetic field | 0 | 50 | 70 | |
| Dispersibility | | excellent | excellent | excellent | |
| Aspect ratio | | 280 | 300 | 300 | |

If the amount of conductive fibers (weight %) was decreased to not more than 3 : 97 relative to the thermoplastic resin as shown in Table 5, it was not possible to obtain any practical shield effect. If, on the other hand, the aforementioned ratio was increased to not less than 70 : 30, the thermoplastic resin (matrix) was cracked or broken up, failing to obtain better pellets.

Industrial Applicability

According to this invention, only a smaller amount of conductive fibers is required due to an aspect ratio as great as not less than 100 and to a better dispersibility of the conductive fibers in the matrix resin at the time of molding. As a result, the pellets of this invention are light in weight, low in cost and excellent in a shield effect, and very useful for use in, for example, a casing of electronic apparatus.

**Claims**

**1.** A method for manufacturing pellets which can be formed into an electromagnetic wave shielding material, comprising the steps of:
impregnating a bundle of conductive fibers with a pressurized melted thermoplastic resin oligomer,
extruding a thermoplastic resin which is compatible with the resin oligomer on the outside of the impregnated bundle to coat it whilst the resin oligomer retains its fluidity; and
cutting the resultant impregnated and coated bundle into pellets.

**2.** A method according to claim 1, wherein the resin oligomer has a viscosity of not more than 10000 centipoises.

**3.** A method according to claim 1, wherein said conductive fibers are carbon fibers or metal fibers.

**4.** A method according to claim 1, wherein said conductive fibers are stainless steel fibers, copper fibers or carbon fibers.

**5.** A method according to claim 1, wherein the thermoplastic resin is selected from a high, medium or low density polyethylene, a straight chain low density polyethylene, polypropylene, polycarbonate, polyvinyl chloride, polyethyleneterephthalate, polybutyleneterephthalate, polyamide, acrylonitrile-butadiene-styrene copolymer and acrylonitrile-styrene copolymer.

**6.** A method according to claim 1, wherein the weight ratio of the conductive fibers to the thermoplastic resin is set to 5 : 95 to 50 : 50.

**7.** A method according to claim 2, wherein the weight ratio of the resin oligomer to the conductive fibers is set to 5 : 95 to 30 : 70.

**8.** A method according to claim 1, wherein the conductive fibers have a diameter of 4 to 100 µm and a length of 3 to 10 mm.

**9.** A method according to claim 1, wherein the thermoplastic resin is polyethylene resin and the resin oligomer is an aliphatic hydrocarbon series wax having an average molecular weight of not more than 20000.

**10.** A method according to claim 1, wherein the thermoplastic resin is a polyester resin and the resin oligomer is a linear copolymer type polyester resin having an average molecular weight of below 20000.

**11.** A method according to claim 1, wherein the thermoplastic resin is an acrylonitrile-butadiene-styrene copolymer or acrylonitrile-styrene copolymer, and the resin oligomer is an ethyleneethylacrylate resin having an average molecular weight of not more than 15000.

**12.** A method according to claim 1, wherein the thermoplastic resin is polyvinyl chloride, and the resin oligomer is selected from ethylenevinylacetate copolymer having a melt flow rate of not less than 100 (g/10 minutes), an ethyleneethylacrylate resin having a melt flow rate of not less than 100 (g/10 minutes), and a polyester resin having a structural formula

$$-\!\!\!\!\left( (CH_2)_5-\overset{\overset{\displaystyle O}{\|}}{C}-O \right)\!\!\!\!-_n$$

where n < 300.

**Patentansprüche**

1. Verfahren zur Herstellung von Pellets, aus welchen ein gegen elektromagnetische Wellen abschirmendes Material gebildet werden kann, das die folgenden Schritte umfaßt:
   - Imprägnieren eines Bündels leitfähiger Fasern mit einem unter Druck stehenden geschmolzenen thermoplastischen Harz-Oligomer;
   - Extrudieren eines thermoplastischen Harzes, welches mit dem Harz-Oligomer verträglich ist, auf die Außenseite des imprägnierten Bündels, um es zu beschichten, wobei das Harz-Oligomer seine Fluidität bewahrt; und
   - Schneiden des imprägnierten und beschichteten Bündels in Pellets.

2. Verfahren nach Anspruch 1, bei dem das Harz-Oligomer eine Viskosität von mehr als 10000 Centipoise hat.

3. Verfahren nach Anspruch 1, bei dem die leitfähigen Fasern Kohlenstoff-Fasern oder Metallfasern sind.

4. Verfahren nach Anspruch 1, bei dem die leitfähigen Fasern Fasern aus nichtrostendem Stahl, Kupferfasern oder Kohlenstoff-Fasern sind.

5. Verfahren nach Anspruch 1, bei dem das thermoplastische Harz aus einem Polyethylen hoher, mittlerer oder geringer Dichte, einem geradkettigen Polyethylen geringer Dichte, Polypropylen, Polycarbonat, Polyvinylchlorid, Polyethylenterephthalat, Polybutylenterephthalat, Polyamid, Acrylnitril-Butadien-Styrol-Copolymer und Acrylnitril-Styrol-Copolymer ausgewählt wird.

6. Verfahren nach Anspruch 1, bei dem das Gewichtsverhältnis der leitfähigen Fasern zu dem thermoplastischen Harz auf 5:95 bis 50:50 festgelegt ist.

7. Verfahren nach Anspruch 2, bei dem das Gewichtsverhältnis des Oligomer-Harzes zu den leitfähigen Fasern auf 5:95 bis 30:70 festgelegt ist.

8. Verfahren nach Anspruch 1, bei dem die leitfähigen Fasern einen Durchmesser von 4 bis 100 $\mu$m und eine Länge von 3 bis 10 mm haben.

9. Verfahren nach Anspruch 1, bei dem das thermoplastische Harz Polyethylenharzes ist, und das Harz-Oligomer ein Wachs der aliphatischen Kohlenwasserstoffreihe mit einem Durchschnitts-Molekulargewicht von nicht mehr als 20000 ist.

10. Verfahren nach Anspruch 1, bei dem das thermoplastische Harz ein Polyesterharz ist, und das Harz-Oligomer ein Polyesterharz des linearen Copolymertyps mit einem Durchschnitts-Molekulargewicht von unter 20000 ist.

11. Verfahren nach Anspruch 1, bei dem das thermoplastische Harz ein Acrylnitril-Butadien-Styrol-Copolymer oder ein Acrylnitril-Styrol-Copolymer ist, und das Harz-Oligomer ein Ethylen-Ethylacrylat-Harz mit einem Durchschnitts-Molekulargewicht von mehr als 15000 ist.

12. Verfahren nach Anspruch 1, bei dem das thermoplastische Harz Polyvinylchlorid ist, und das Harz-Oligomer unter Ethylen-Vinylacetat-Copolymer mit einer Fließfähigkeit von nicht weniger als 100 (g/10 min), einem Ethylen-Ethylacrylat-Harz mit einer Fließfähigkeit von nicht weniger als 100 (g/10 min) und einem Polyesterharz, das die Strukturformel

$$\left(CH_2\right)_5-\overset{\overset{O}{\|}}{C}-O\!\!\left.\right)_n$$

in der n < 300 ist, hat, ausgewählt wird.

**Revendications**

1. Procédé de fabrication de pastilles que l'on peut façonner en un matériau de protection contre les ondes électromagnétiques, comprenant les étapes consistant à :
   imprégner un faisceau de fibres conductrices avec une résine oligomère thermoplastique fondue et sous pression,
   extruder une résine thermoplastique compatible avec la résine oligomère, sur la surface extérieure du faisceau imprégné, pour revêtir celui-ci, la résine oligomère conservant sa fluidité, et
   couper en pastilles le faisceau résultant, imprégné et revêtu.

2. Procédé conforme à la revendication 1, dans lequel la résine oligomère présente une viscosité ne valant pas plus de 10000 centipoises.

3. Procédé conforme à la revendication 1, dans lequel lesdites fibres conductrices sont des fibres de carbone ou des fibres de métal.

4. Procédé conforme à la revendication 1, dans lequel lesdites fibres conductrices sont des fibres d'acier inoxydable, des fibres de cuivre ou des fibres de carbone.

5. Procédé conforme à la revendication 1, dans lequel la résine thermoplastique est choisie parmi un polyéthylène à haute, moyenne ou basse densité, un polyéthylène basse densité linéaire, un polypropylène, un polycarbonate, un poly(chlorure de vinyle), un poly(téréphtalate d'éthylène), un poly(téréphtalate de butylène), un polyamide, un copolymère acrylonitrile-butadiène-styrène et un copolymère acrylonitrile-styrène.

6. Procédé conforme à la revendication 1, dans lequel le rapport pondéral des fibres conductrices à la résine thermoplastique vaut entre 5/95 et 50/50.

7. Procédé conforme à la revendication 2, dans lequel le rapport pondéral de la résine oligomère aux fibres conductrices vaut entre 5/95 et 30/70.

8. Procédé conforme à la revendication 1, dans lequel les fibres conductrices ont de 4 à 100 µm de diamètre et de 3 à 10 mm de long.

9. Procédé conforme à la revendication 1, dans lequel la résine thermoplastique est une résine de polyéthylène et la résine oligomère est une cire de la série des hydrocarbures aliphatiques dont la masse moléculaire moyenne ne vaut pas plus de 20000.

10. Procédé conforme à la revendication 1, dans lequel la résine thermoplastique est une résine de polyester et la résine oligomère est une résine de polyester de type copolymère linéaire dont la masse moléculaire moyenne est inférieure à 20000.

11. Procédé conforme à la revendication 1, dans lequel la résine thermoplastique est un copolymère acrylonitrile-butadiène-styrène ou un copolymère acrylonitrile-styrène et la résine oligomère est une résine éthylène-(acrylate d'éthyle) dont la masse moléculaire moyenne ne vaut pas plus de 15000.

12. Procédé conforme à la revendication 1, dans lequel la résine thermoplastique est un poly(chlorure de vinyle) et la résine oligomère est choisie parmi un copolymère éthylène-(acétate de vinyle) dont l'indice de fluidité à chaud ne vaut pas moins de 100 g/10 minutes, une résine éthylène-(acrylate d'éthyle) dont l'indice de fluidité à chaud ne vaut pas moins de 100 g/10 minutes, et une résine de polyester de formule structurale

$-((CH_2)_5-CO-O)_n-$

dans laquelle n est inférieur à 300.

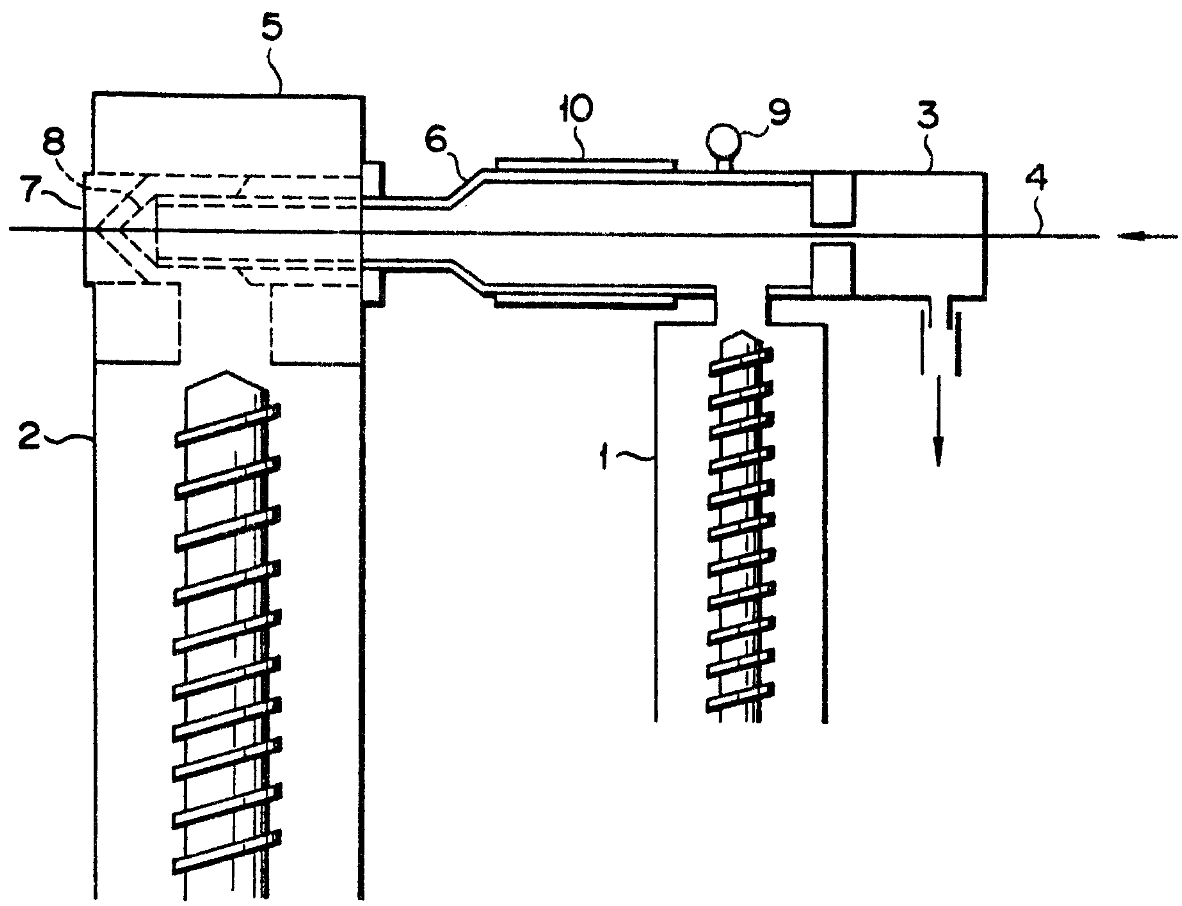


FIG. 1